(19) Europäisches Patentamt
European Patent Office
Office européen des brevets

(11) Numéro de publication : 0 469 022 B1

# (12) FASCICULE DE BREVET EUROPEEN

(45) Date de publication du fascicule du brevet : **21.04.93 Bulletin 93/16**

(51) Int. Cl.$^5$ : **B01J 37/20**

(21) Numéro de dépôt : **90906245.7**

(22) Date de dépôt : **23.03.90**

(86) Numéro de dépôt international : **PCT/FR90/00195**

(87) Numéro de publication internationale : **WO 90/12647 01.11.90 Gazette 90/25**

## (54) PROCEDE DE PRESULFURATION DE CATALYSEUR DE TRAITEMENT D'HYDROCARBURES.

(30) Priorité : **19.04.89 FR 8905302**
**20.07.89 FR 8909928**

(43) Date de publication de la demande : **05.02.92 Bulletin 92/06**

(45) Mention de la délivrance du brevet : **21.04.93 Bulletin 93/16**

(84) Etats contractants désignés : **BE DE ES GB IT LU**

(56) Documents cités :
**EP-A- 0 153 233**
**EP-A- 0 276 681**
**US-A- 4 719 195**

(73) Titulaire : **EUROPEENNE DE RETRAITEMENT DE CATALYSEURS (en abrégé EURECAT)**
**Quai Jean Jaurès - Boite Postale 45**
**F-07800 LA VOULTE SUR RHONE (FR)**

(72) Inventeur : **BERREBI, Georges**
**17, rue Barnave**
**F-26500 Bourg-lès-Valence (FR)**

(74) Mandataire : **Andreeff, François**
**INSTITUT FRANCAIS DU PETROLE 4, avenue de Bois-Préau**
**F-92502 Rueil-Malmaison (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de présulfuration de catalyseur de traitement d'hydrocarbures. L'invention est un perfectionnement du procédé décrit dans le brevet EP-B-153233 de la demanderesse.

Il est souvent souhaitable de procéder à une sulfuration (généralement appelée "présulfuration") des métaux entrant dans la composition de certains catalyseurs de raffinage et/ou d'hydroconversion d'hydrocarbures soit lorsque ces catalyseurs sont neufs soit à l'issue de la régénération de ces catalyseurs avant de les réutiliser.

Une présulfuration des catalyseurs neufs ou régénérés est ainsi souhaitable pour l'emploi de ces catalyseurs dans les réactions de raffinage, par exemple les réactions de désulfuration ou hydrodésulfuration de diverses essences, par exemple des essences de craquage catalytique ou de craquage à la vapeur dont il convient, avant emploi, d'abaisser la teneur en soufre sans modifier l'indice d'octane de ces essences ou en le modifiant aussi peu que possible.

Le catalyseur utilisé pour ce type de désulfuration ou d'hydrodésulfuration renferme un support généralement non acide par exemple une alumine ou des mélanges d'alumine (brevet US.A. 4 334 982) ou tout autre support adéquat à base d'au moins un oxyde d'un métal ou de métalloïde (magnésie (US.A. 4 132 632, US-A- 4 140 626), silice, silice-alumines, silice-magnésies, les silice-fluorées, les alumines borées, les argiles, les charbons, les alumines fluorées) ce ou ces mélanges de supports pouvant au moins en partie se présenter sous forme amorphe ou sous forme cristallisée (zéolites) et le catalyseur renfermant en outre 0,2 à 30 % d'au moins un métal actif des groupes VI, VIII ou autre choisi par exemple dans le groupe constitué, par le cobalt, le molybdène, le nickel et le tungstène (US.A 3 732 155 et 3 804 748).

Une sulfuration ou présulfuration de catalyseur régénéré est également souhaitable dans les réactions d'hydroreformage d'hydrocarbures (reforming notamment d'un naphta) et de production d'hydrocarbures aromatiques ("aromizing) par exemple la production de benzene, de toluène et de xylènes (ortho, méta ou para), soit à partir d'essences insaturées ou non (par exemple des essences de pyrolyse, de craquage, en particulier de steam cracking (craquage à la vapeur), ou de reformage catalytique), soit encore à partir d'hydrocarbures naphténiques capables par déshydrogénation de se transformer en hydrocarbures aromatiques.

Le catalyseur peut renfermer, par exemple, au moins un métal de la famille du platine, c'est-à-dire un métal noble tel que platine, palladium, iridium, rhodium, ruthénium, osmium déposé sur un support adéquat (alumine, silice, silice-alumine, alumines fluorées, silices fluorées, zéolite, etc... ou des mélanges de tels supports).

Une sulfuration (présulfuration) d'un catalyseur neuf ou régénéré convient encore, dans certains cas, pour la sulfuration partielle ou totale de catalyseur, également à base d'un des supports déjà cités et d'au moins un des métaux actifs déjà cités, utilisables dans des réactions, de conversions d'hydrocarbures telles que les réactions d'hydrogénation, de déshydrogénation, d'alkylation, d'hydroalkylation, de déalkylation, d'hydrodéalkylation, de déalkylation à la vapeur d'eau, d'isomérisation et d'hydrodémétallisation des charges lourdes.

Les métaux des catalyseurs utilisés en raffinage, hydroraffinage ou en pétrochimie, qu'ils soient neufs ou régénérés sont le plus souvent sous forme oxydée, parfois sous forme métallique (pour certains métaux des catalyseurs de reforming notamment). Or, les métaux de ces catalyseurs, n'étant souvent actifs que sous forme sulfurée ou au moins partiellement sulfurée, il est donc nécessaire au raffineur ou au pétrochimiste d'opérer une sulfuration du catalyseur préalablement à sa mise en oeuvre.

Actuellement, la régénération des catalyseurs se fait de plus en plus chez un spécialiste de la régénération de catalyseurs, parfois loin de l'unité industrielle. Or, il parait raisonnable de penser à restituer au raffineur un produit prêt à l'emploi, ce qui permet le procédé original et efficace de la demanderesse décrit dans EP.B.153233.

Ce procédé permet lorsque le catalyseur sera soumis des son démarrage de préférence sur le site ("in situ") à la réaction classique d'activation en présence d'hydrogène, (généralement au-dessus de 100 °C), de procéder ensuite grâce à la présence d'hydrogène sur le site, à la sulfuration au taux requis, stoechiométrique ou non stoechiométrique, du ou des métaux actifs entrant dans la composition du catalyseur. Le procédé consiste à incorporer du disulfure d'ammonium en l'absence d'hydrogène dans la porosité du catalyseur neuf ou régénéré.

Dans ce procédé, on imprègne le catalyseur généralement "ex situ" en l''absence d'hydrogène avec une solution aqueuse de disulfure d'ammonium $S(NH_4)_2$ à une température comprise entre 0 et 50 °C, de préférence entre 10 à 35 °C et par exemple à la température ambiante de façon à incorporer le degré adéquat de soufre dans la porosité du catalyseur, le traitement du catalyseur étant ensuite suivi d'un séchage de ce catalyseur par exemple à une température inférieure à 120 °C et de préférence comprise entre 95 et 115 °C. Au dessus de 120 °C, on a constaté que le soufre était partiellement éliminé du catalyseur.

Un des avantages du procédé est de pouvoir procéder à la présulfuration du catalyseur uniquement en présence d'une solution aqueuse. Il a été proposé par la demanderesse dans US.A. 4,719,195 d'introduire des

polysulfures organiques dans la porosité de la masse catalytique ; or cette dernière méthode présente l'inconvénient d'opérer la présulfuration en présence d'un solvant organique de type "white spirit" plus difficilement éliminable que l'eau en fin de procédé. Le présent procédé, en outre, présente l'avantage de pouvoir utiliser telle quelle la solution commerciale de sulfure d'ammonium.

On a maintenant découvert, dans le cadre de la présente invention, un moyen pour améliorer la présulfuration du catalyseur, moyen qui se traduira notamment par une plus longue stabilité des catalyseurs lors de tests de longue durée.

Ce moyen consiste à opérer l'incorporation du sulfure d'ammonium dans la porosité du catalyseur, en présence d'au moins un additif particulier sulfuré.

On utilisera, en poids, avantageusement 5 à 50 % de préférence 10-40 % et plus particulièrement 15-30 % de l'additif ou des additifs choisis par rapport au poids de sulfure introduit sur le catalyseur.

Le ou les additifs peuvent être ajoutés, par exemple, avec la solution de disulfure d'ammonium, soit à l'état pur, soit dissous dans un solvant adéquat, l'eau notamment.

Le rôle de cet additif est d'augmenter l'incorporation de soufre dans le catalyseur. Dans une méthode préférée on pourra introduire sur le catalyseur du disulfure d'ammonium au cours d'une première imprégnation. Puis au cours d'une deuxième imprégnation on ajoute l'additif (en solution aqueuse ou non) seul ou en mélange avec du disulfure d'ammonium.

Ainsi d'une façon plus particulière, et notamment lorsque l'on désire transformer en sulfures, la totalité des oxydes des métaux promoteurs que contient le catalyseur, le procédé consiste alors :

(a) à imprégner le catalyseur à une température comprise entre 0 et 50 °C à son volume d'imprégnation par une solution aqueuse de disulfure d'ammonium $S(NH_4)_2$, (de préférence on opère entre 10 et 35 °C),

(b) à sécher le catalyseur à une température inférieure à 120 °C et de préférence entre 95 à 115°C,

(c) à imprégner à nouveau (entre 0 et 50 °C, de préférence entre 10 et 35 °C) au moins une deuxième fois le catalyseur à son volume d'imprégnation ou à un volume inférieur, en fonction de la quantité de soufre à introduire dans le catalyseur, par un mélange d'une solution aqueuse de disulfure d'ammonium $S(NH_4)_2$ et d'un additif conforme à l'invention,

(d) à sécher le catalyseur à une température inférieure à 130 °C et de préférence entre 90 et 120 °C et plus particulièrement au voisinage de 100 °C.

Eventuellement, si nécessaire, pour le cas où des quantités importantes de soufre doivent être préintroduites dans le catalyseur, d'autres imprégnations du catalyseur à l'aide d'une solution de disulfure d'ammonium et/ou de l'additif seront effectuées, chacun d'elles étant suivie d'un séchage à une température inférieure à 120 °C.

Il peut ainsi être nécessaire d'effectuer plusieurs imprégnations parce que le volume poreux du catalyseur n'est pas suffisant pour absorber lors de la première imprégnation toute la solution aqueuse théorique de sulfure d'ammonium et/ou d'additif renfermant la quantité, stoechiométrique ou non, de soufre que l'on se propose d'introduire dans la masse catalytique (une solution commerciale de sulfure d'ammonium renferme au minium 20 % en poids de soufre et vouloir alors concentrer de telles solutions se traduirait par la décomposition du disulfure d'ammonium).

Le séchage qui suit la première imprégnation de disulfure d'ammonium est de préférence effectué dans un gaz renfermant de l'oxygène moléculaire et notamment dans l'air.

On peut ainsi effectuer l'invention en présence d'un additif sulfuré choisi dans le groupe constitué par les thiodiazoles, les thioacides, les thioamides, les thiocyanates, les thioesters, les thiophénols, les thiosemicarbazides et les thiourées. On citera à titre d'exemple l'acide thiobenzoïque, le 2-thiocrésol, le 3-thiocrésol, le 4-thiocrésol, l'acide 3,3' thiodipropionique, le 3,3' thiodi propionitrile, le 2,3,6 triméthyl thiophénol, le méthyl thioglycollate, le 4-méthyl 3-thiosemicarbazide, le naphtahalène 2-thiol, le phényl isothiocyanate, le 2 phényl thiophénol, le thioacétamide, le thiobenzamide, le 2,6 diméthyl thiophénol, le 3,5 diméthyl thiophénol, le 2,2' dinitrodiphényl disulphide, la 2,5-dithiobiurée, l'éthyl thioglyacollate, le 2-méthoxy thiophénol, le 3-méthoxy thiophénol, le 2-méthyl 5-mercapto 1,3,4-thiadiazole, l'amidinothiourée, le 2-amino 5-éthylthio 1,3,4-thiadiazole, le 2-amino 5-mercapto 1,3,4-thiadiazole, le 3-amino 5-mercapto 1,2,4-triazole, le 2-amino thiophénol, le benzène 1,3-dithiol, le 3-chloro thiophénol et le 2,5-dimercapto 1,3,4-thiadiazole.

Mais l'invention peut également être effectuée en présence d'autres types d'additifs soufrés. On pourra ainsi citer les mercapto-alcools de formule :

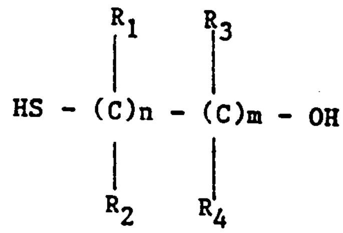

où n et m sont des nombres entiers, $R_1$, $R_2$, $R_3$, $R_4$, identiques ou différents sont des atomes d'hydrogène ou des radicaux organiques alkyle, aryle, aralkyle, alkylaryle etc... ayant de préférence 1 à 20 ; de préférence 1 à 6 atomes de carbone par molécule ; de préférence n = 1-10 (par exemple 1-2) et m = 1-10 (par exemple 1-2).

A titre d'exemple, on citera les 2-mercaptoéthanol, 1-mercapto-2-propanol, 1-mercapto-2-butanol, 3-mercapto-1-propanol, 1-mercapto-2-hexanol, 2-mercaptocyclohexanol, 2-mercaptocyclopentanol, 3-mercaptobicyclo (2,2,1)-heptane-2-ol-mercapto-2-pentanol, 1-mercapto-2-phényl-2-éthanol, 3-mercapto-3-phely-propane-1-ol, 2-mercapto-3-phely-propane-1-ol, thioglycérol, l'acide 9-mercapto 10-hydroxyoctadécanoïque et l'acide 10-mercapto 10-hycroxyoctadécanoïque. On citera plus particulièrement les composés de formule $HS-CH_2-CH_2OH$ (2 mercaptoéthanol) et $HS-CH_2-C\ (C_6H_5)\ H-OH$ (1-mercapto-2-phényl-2 éthanol).

On peut utiliser d'une façon plus générale les thiols (thioalcools, mercaptans, thiophénols) de formule $R_1-SH$ où R est un radical organique, les thioéthers de formule $R_1-S-R_2$, les disulfures organiques de formule $R_1-S-S-R_2$ ou encore $HO-R_1-S-S-R_2-OH$.

On citera ainsi les alkylmercaptans (tel que le n-butyl mercaptan, le n-hexylmercaptan), les monothioglycols (tel que le monothioethylène glycol), les dithioglycols tel que le dithiopropylène glycol, les arylmercaptans déjà cités ci-dessus (thiophénols) (tels que le thiophénol, les thiocrésols), les dithiobenzènes (tel que la dithiorésorcine), les hétérocycles substitués par des groupes mercapto (tels que la mercaptopyridine, la mercaptopyrimidine etc... ). Comme exemple de thioéthers, on citera les dialkyle sulfures (tels que les di-n-butyl sulfures, les di-tertio butyl sulfures), les dihydroxyalkyle sulfures (tel que le thiodiéthylène glycol ($S(CH_2CH_2OH)_2$), le thiodipropylèneglycol etc...) les diaryl sulfures (diphényl sulfure etc... ), les diaralkyl sulfures (dibenzyl sulfure etc... ) les alkyl ethers, les thiophénols (thioanisole etc... ), les thioéthers cycliques et leurs dérivés substitués (éthylène sulfure, thiophène, thiazole, thiopyrone, thioxanthone, thioxanthydrol, 1, 4 thioxane etc..., les S-alkyle éthers des hétérocyles substitués par des mercaptans (2-méthyl-thio 4,6-diamino pyrimidine etc...).

Parmi les familles des composés précédents, on citera plus particulièrement le diméthyl sulfoxyde, l'éthylthiol éthanol, l'acide thio glycolique, le di thio glycol et les disulfures organiques de formule notamment

$$HO-R_1-S-S-R_2-OH$$

ou

$$HO-(CH_2)_x-S-(CH_2)_{x'}-S-(CH_2)_{x''}-OH$$

où $R_1$ et $R_2$ sont définis comme précédemment, où x, x' et x", identiques ou différents sont un nombre entier.

On peut citer encore plus particulièrement à titre d'autre d'exemple le diéthanol disulfure ou 2,2dithiobis éthanol de formule (D.E.O.D.S.)

$$HO-C_2H_4-S-S-C_2H_4-OH$$

soluble notamment dans l'eau, les glycols et les polyglycols.

Exemples :

Les tests effectués ont pour but de préparer une charge catalytique facilement manipulable, de réduire les coûts d'investissement pour obtenir un rendement économiquement viable, de pouvoir s'appuyer sur les installations de régénération ex-situ et faire faire une économie de temps au raffineur tout en facilitant la remise en oeuvre de la charge catalytique.

On rappelle que la base de la sulfuration d'un catalyseur conformément au procédé de l'invention, reste la même que dans l'art antérieur, à savoir l'utilisation d'un mélange d'hydrogène et d'hydrogène sulfuré :

$$MoO_3 + 2\ H_2S + H2 \longrightarrow MoS_2 + 3\ H_2O + Q \qquad (1)$$

$$9\ CoO + 8\ H_2S + H_2 \longrightarrow Co_9S_8 + 9\ H_2O + Q \qquad (2)$$

$$3\ NiO + 2\ H_2S + H_2 \longrightarrow Ni_3S_2 + 3\ H_2O + Q \qquad (3)$$

Le principe du procédé consiste à charger le catalyseur par le sulfure d'ammonium en mélange ou non avec du DEDs (diéthanol disulfure). Ceci se fait par adsorption de ce ou ces composés dans la porosité du catalyseur. Le catalyseur ainsi traité est activé ultérieurement dans le réacteur de la raffinerie par passage d'hydrogène chauffé par exemple entre 80 et 200 °C. Le produit sulfuré libère $H_2S$, la sulfuration des oxydes s'opère alors conformément aux techniques connues rappelées ci-dessus.

Quelques essais ont été faits sur un catalyseur neuf KETJEN 165/1.5 E, calciné à 550 °C, neuf ou régénéré.

Exemple 1 (comparatif) :

L'agent de sulfuration (ou réactif) testé est le disulfure d'ammonium.

La manipulation s'effectue en immergeant une quantité donnée de catalyseur dans un volume excessif du réactif. L'imprégnation dure 1 heure.

On se propose d'introduire du sulfure d'ammonium dans le catalyseur KETJEN neuf ou régénéré dont le support est de l'alumine et qui renferme 15,4 % en poids d'oxyde de molybdène $Mo0_3$ et 4,23 % en poids d'oxyde de cobalt Co0. Le but de l'opération est que, ultérieurement, sur le site où sera utilisé ce catalyseur, un prétraitement à l'hydrogene du catalyseur puisse transformer tout l'oxyde de molybdène en sulfure de molybdène $MoS_2$ et tout l'oxyde de cobalt en sulfure de cobalt de formule $Co_9S_8$. Le volume poreux du catalyseur est de 46 ml pour 100 grammes de catalyseur sec.

On peut calculer le poids de soufre (masse moléculaire : 32) qu'il convient d'introduire dans la porosité du catalyseur pour transformer la totalité des oxydes de molybdène et de cobalt en sulfures ($MoS_2$ et $Co_9S_8$) 15,4 g d'oxyde de molybdène (masse moléculaire de $Mo0_3$ : 144) dans 100 grammes de catalyseur correspondent à (voir réaction (1) page 9) : $\frac{15,4}{144} \times 2 \times 32 = 6,844$ g de soufre dans ces 100 grammes de catalyseur.

De même, 4,23 g d'oxyde de cobalt (masse moléculaire : 75) dans 100 grammes de catalyseur correspondent à (voir réaction (2) page 9) : $\frac{4,23}{75} \times \frac{8}{9} \times 32 = 1,604$ g de soufre dans ces 100 grammes de catalyseur.

Il est donc nécessaire d'incorporer au total 6,844 + 1,604 = 8,448 g de soufre dans 100 grammess de catalyseur. Pour effectuer cette opération, on utilisera une solution aqueuse commerciale à 20 % de sulfure d'ammonium $(NH_4)_2S$ (masse moléculaire : 68) ; 100 ml d'une telle solution referment : 0,294 molécule de $(NH_4)_2S$ soit 0,294 atome de soufre soit 9,41 g de soufre. Puisqu'il faut introduire 8,448 g de soufre dans 100 g de catalyseur, il conviendra d'utiliser 89,77 ml de ladite solution commerciale pour 100 grammes de catalyseur, ce volume correspondant ainsi à environ deux fois le volume poreux du catalyseur (46 ml pour 100 g), donc à la nécessité d'effectuer ici deux imprégnations successives du catalyseur.

Au cours d'une première imprégnation, on introduit dans le catalyseur, à température ordinaire, 46 ml de la solution commerciale de sulfure d'ammonium. On sèche à 105 °C pendant deux heures environ, sous air. On fait alors une deuxième imprégnation au moyen de 46 ml de la solution commerciale et on sèche à 100 °C pendant deux heures environ, sous azote. Le catalyseur renferme à ce stade 8,6 grammes de soufre pour 100 grammes de catalyseur.

On a constaté qu'en effectuant les séchages à 150 °C, le catalyseur ne renferme que 5,18 % de soufre et que le catalyseur renferme 5,51 % de soufre en effectuant les séchages à 200 °C.

Diverses analyses conventionnelles permettent de conclure, que le soufre est présent dans le catalyseur sous la forme de polysulfure d'ammonium.

Les résultats obtenus sur le catalyseur KETJEN K 165/1,5E traité par le disulfure d'ammonium sont les suivants :

. Perte au feu à 500 °C (P.A.F. à 500 °C)
  - avant traitement : 0.81 %
  - après traitement : azote : 26,76 %

. Analyse carbone et soufre sur le catalyseur imprégné.

| | avant traitement | après traitement sous azote |
|---|---|---|
| S % | 0,38 | 8,76 |
| C % | 0,08 | 0,12 |

Au vu de ces résultats (en particulier les valeurs des P.A.F. à 500 °C), on peut dire que le catalyseur est en moyenne imprégné à 20 % de disulfure d'ammonium soit 8,45 % de soufre en poids de catalyseur sec et oxydé, ce qui correspond au but recherché.

L'activation du catalyseur précédemment traité, est effectuée en faisant passer un courant d'hydrogène à 150 °C au travers d'un lit de catalyseur imprégéné de polysulfure (sous 30 bars).

Quand le lit a atteint 130 °C, la réaction démarre et la température monte jusqu'à 150 °C environ.

Le catalyseur devient noir, ceci est dû aux sulfures métalliques formées.

L'analyse du catalyseur sulfuré donne comme valeur en soufre 8,50 %.

Exemple 2 (selon l'invention) :

On répète les essais précédents comme indiqués précédemment. Toutefois ici, au cours de la deuxième imprégnation, on utilise 25 ml de la solution commerciale de disulfure d'ammonium et le complément théorique nécessaire à la sulfuration stoechiométrique du catalyseur est apporté par une solution aqueuse de diéthanol disulfure.

A l'issue de l'activation du catalyseur, l'analyse du catalyseur sulfuré donne également comme valeur en soufre 8,50 %.

On constatera ultérieurement que la stabilité des activités est améliorée notamment dans les tests de longue durée (plusieurs centaines d'heures dans les unités pilote).

EXEMPLE 3 (selon l'invention)

On opère comme dans l'exemple 2 en utilisant successivement d'autres additifs à la place du D.E.O.D.S. à savoir : le 2-mercaptoéthanol, le diméthyl sulfoxyde, l'éthyl thio éthane, l'acide thioglycolique, le 3-mercapto-1-propanol, le dithioglycol, l'acide mercapto acétique (A.M.A), le thiodiéthylène glycol le di thio glycol, et le D.M.T.D.

On a obtenu de bons résultats sensiblement équivalents à ceux obtenus avec le D.E.O.D.S. sans toutefois parvenir tout à fait aux durées longues des tests réalisés avec le D.E.O.D.S.

## Revendications

1. Procédé de traitement d'un catalyseur neuf ou régénéré, renfermant un support à base d'au moins un oxyde d'un métal ou d'un métalloïde et au moins un métal actif, réalisé en l'absence d'hydrogène et consistant à traiter ledit catalyseur avec une solution aqueuse de disulfure d'ammonium à une température comprise entre 0 et 50 °C, en présence d'au moins un additif sulfuré choisi dans le groupe constitué par les thiodiazoles, les thioacides, les thioamides, les thiocyanates, les thioesters, les thiophénols, les thiosemicarbazides, les thiourées, les mercapto alcools de formule

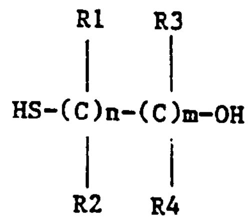

où n et m sont des nombres entiers, R1, R2, R3, R4, identiques ou différents sont des atomes d'hydrogène ou des radicaux organiques alkyle, aryle, aralkyle, alkylaryle, les thiols de formule $R_1$-SH où R est un radical organique, les thioéthers de formule $R_1$-S-$R_2$ où $R_1$ et $R_2$ sont définis comme précédemment et les disulfures organiques de formule $R_1$-S-S-$R_2$ où $R_1$ et $R_2$ sont définis comme précédemment.

2. Procédé selon la revendication 1 de traitement d'un catalyseur neuf ou régénéré renfermant un support à base d'au moins un oxyde d'un métal ou d'un métalloïde et au moins un métal actif, ledit procédé consistant :
   (a) à imprégner le catalyseur à une température comprise entre 0 et 50 °C à son volume d'imprégnation par une solution aqueuse de disulfure d'ammonium,
   (b) à sécher le catalyseur à une température inférieure à 120 °C,
   (c) à imprégner à nouveau au moins une deuxième fois le catalyseur à son volume d'imprégnation ou à un volume inférieur, par une solution aqueuse de disulfure d'ammonium et d'au moins un dit-additif,
   (d) à sécher le catalyseur à une température inférieure à 130 °C.

3. Procédé selon l'une des revendications 1 et 2 dans lequel le poids d'additif(s) utilisé (s) représente 5 à 50 % par rapport au poids de soufre introduit dans le catalyseur.

4. Procédé selon l'une des revendications 1 à 3 dans lequel ledit additif est le D.E.O.D.S ou diéthanol disulfure.

**Patentansprüche**

1. Verfahren zur Behandlung eines neuen oder regenerierten Katalysators, der einen Träger auf Basis mindestens eines Metall- oder Metalloidoxids und mindestens ein aktives Metall enthält, das in Abwesenheit von Wasserstoff durchgeführt wird und darin besteht, daß man den genannten Katalysator behandelt mit einer wäßrigen Ammoniumdisulfid-Lösung bei einer Temperatur zwischen 0 und 50°C in Gegenwart mindestens eines schwefelhaltigen Additivs, ausgewählt aus der Gruppe, die besteht aus Thiodiazolen, Thiosäuren, Thioamiden, Thiocyanaten, Thioestern, Thiophenolen, Thiosemicarbaziden, Thioharnstoffen, Mercaptoalkoholen der Formel

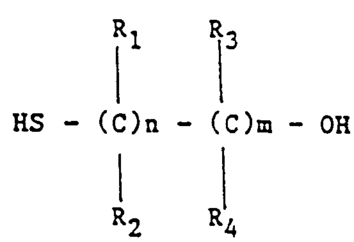

worin n und m ganze Zahlen darstellen, $R_1$, $R_2$, $R_3$ und $R_4$, die gleich oder verschieden sind, Wasserstoffatome oder organische Alkyl-, Aryl-, Aralkyl-, Alkylarylreste darstellen,
Thiolen der Formel $R_1$-SH, worin R einen organischen Rest darstellt, Thioäthern der Formel $R_1$-S-$R_2$, worin $R_1$ und $R_2$ wie oben definiert sind, und organischen Disulfiden der Formel $R_1$-S-S-$R_2$, worin $R_1$ und $R_2$ wie oben definiert sind.

2. Verfahren nach Anspruch 1 zur Behandlung eines neuen oder regenerierten Katalysators, der einen Träger auf Basis mindestens eines Metall- oder Metalloidoxids und mindestens ein aktives Metall enthält, wobei das Verfahren darin besteht, daß man
   a) den Katalysator bei einer Temperatur zwischen 0 und 50°C bis zu seinem Imprägnierungsvolumen mit einer wäßrigen Ammoniumdisulfidlösung imprägniert,
   b) den Katalysator bei einer Temperatur unterhalb 120°C trocknet;
   c) den Katalysator mindestens ein zweites Mal erneut imprägniert bis zu seinem Imprägnierungsvolumen oder bis auf ein geringeres Volumen mit einer wäßrigen Lösung von Ammoniumdisulfid und mindestens einem Additiv, und
   d) den Katalysator bei einer Temperatur unterhalb 130°C trocknet.

3. Verfahren nach einem der Ansprüche 1 und 2, in dem das Gewicht des verwendeten Additivs (der verwendeten Additive) 5 bis 50 %, bezogen auf das Gewicht des in den Katalysator eingeführten Schwefels, darstellt.

4. Verfahren nach einem der Ansprüche 1 bis 3, bei dem das Additiv das D.E.O.D.S. oder Diethanoldisulfid ist.

## Claims

1. Process of processing a new or regenerated catalyst, containing a support with a base of at least one metal oxide or a metalloid and at least one active metal, performed in the absence of hydrogen and consisting in processing said catalyst with an aqueous ammonium disulfide solution at a temperature between 0 and 50°, in the presence of at least one sulfur additive selected in the group consisting of thiodiazoles, thio acids, thio amides, thiocyanates, thio esters, thiophenols, thiosemicarbazides, thioureas, mercapto alcohols of formula

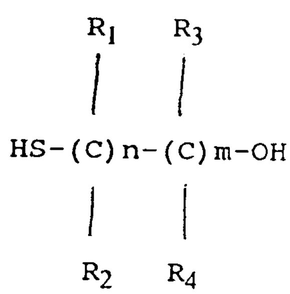

   where n and m are whole numbers, $R_1$, $R_2$, $R_3$, $R_4$, identical or different, are atoms of hydrogen or alkyl, aryl, aralkyl, alkylaryl organic radicals, thiols of formula $R_1$-SH where R is an organic radical, thio ethers of formula $R_1$-S-$R_2$ where $R_1$ and $R_2$ are defined as above and the organic disulfides of formula $R_1$-S-S-$R_2$ where $R_1$ and $R_2$ are defined as above.

2. Process according to claim 1 for processing a new or regenerated catalyst containing a support with a base of at least one metal oxide and a metalloid and at least one active metal, said process consisting:
   (a) in impregnating the catalyst at a temperature between 0 and 50°C to its impregnation volume by an aqueous ammonium disulfide solution,
   (b) in drying the catalyst at a temperature less than 120°C,
   (c) in again impregnating at least a second time the catalyst to its impregnation volume or to a lower volume, by an aqueous ammonium disulfide solution and at least one said additive,
   (d) in drying the catalyst at a temperature lower than 130°C.

3. Process according to one of claims 1 and 2 wherein the weight of the additive or additives used represents 5 to 50% relative to the weight of sulfur introduced in the catalyst.

4. Process according to one of claims 1 to 3, where said additive is D.E.O.D.S. or diethanol disulfide.